Europäisches Patentamt

European Patent Office

Office européen des brevets

(11) Publication number: **0 292 592**
**A1**

## (12) EUROPEAN PATENT APPLICATION

(21) Application number: 87107698.0

(22) Date of filing: 26.05.87

(51) Int. Cl.⁴: **C08G 18/40 , C08G 18/50**

(43) Date of publication of application:
30.11.88 Bulletin 88/48

(84) Designated Contracting States:
**BE DE ES FR GB IT NL SE**

(71) Applicant: **THE DOW CHEMICAL COMPANY**
**2030 Dow Center Abbott Road P.O. Box 1967**
**Midland, MI 48640(US)**

(72) Inventor: **Pritchard, James R.**
**850 E. Center**
**Wallingford Connecticut 06492(US)**
Inventor: **Regelman, Dale F.**
**11200 E. Irvington Road,**
**Tucson Arizona 85747(US)**

(74) Representative: **Henkel, Feiler, Hänzel &**
**Partner**
**Möhlstrasse 37**
**D-8000 München 80(DE)**

(54) **Active hydrogen compositions and thermally stable and high impact resistant structural polyurethane foams prepared therefrom.**

(57) Molded cellular polymers are disclosed which are derived from the reaction of organic polyisocyanates with novel active hydrogen compositions comprising (A) a polyester polyol mixture derived from (i) an aromatic polycarboxylic compound containing two or more carboxylic groups; and (ii) an excess of at least one polyol having from 2 to 8 hydroxyl groups and an equivalent weight of from 30 to 250; and (B) from 5 to 30 percent by weight of a primary or secondary amine terminated polyether of greater than 1500 molecular weight and amine functionality of from 2 to 8.

The molded products are characterized by a combination of excellent impact strength and resistance to high temperatures as well as good resistance to burning.

EP 0 292 592 A1

# ACTIVE HYDROGEN COMPOSITIONS AND THERMALLY STABLE AND HIGH IMPACT RESISTANT STRUCTURAL POLYURETHANE FOAMS PREPARED THEREFROM

This invention relates to the preparation of polymer foams and is more particularly concerned with active hydrogen compositions and molded polyurethane foams characterized by high impact strength and good thermal stability prepared from said compositions.

Molded cellular polymers having polyurethane or polyurethane-polyisocyanurate linkages are well known and have been commercially available for a considerable period of time. For example, U. S. Patent 3,655,597 disclosed molded polyurethanes having compact skins by reacting together organic polyisocyanates, polyols, non-aqueous blowing agents, a diamine and a catalyst. U. S. 3,836,424 disclosed molded polyisocyanurate foam articles having skins with improved impact resistance.

More recently molded cellular polymers have been prepared by the reaction injection molding (RIM) process. U. S. 4,292,411 discloses an improvement which consists of the use of a catalyst combination of organic initiators containing at least one primary or secondary amine with an organic bismuth compound. Included in the initiators are a class of polyoxypropylenediamines of molecular weight up to 1000. Disclosed as a general class of polyols are those polyester polyols having at least 2 hydroxyl groups and being prepared from polycarboxylic acids and excess of low molecular weight polyols.

U. S. 4,263,408 discloses molded cellular foams prepared from aliphatic or alicyclic polyisocyanates combined with specific types of catalyst combinations. These molded products are characterized by good resistance to weathering and being non-yellowing.

Most recently U. S. 4,530,941 has disclosed the preparation of a wide variety of types of molded foams including polyurethane and polyurethane-polyisocyanurate molded products wherein part or all of the polyol portion of the ingredients is replaced by aminated polyethers of relatively high molecular weight. Molded structural foam products when prepared in accordance with the disclosed method, using high levels of extenders, can have excellent impact strengths but a fall-off in heat stability occurs.

It has now been discovered that through the use of a certain type of polyester polyol mixture in combination with certain aminated polyethers, molded cellular polyurethanes can be prepared with improved impact strengths while at the same time suffering from little, if any, fall-off in heat resistance.

This invention is directed to novel active hydrogen compositions and process therefor characterized by the following mixture of:

A. a polyester polyol mixture derived from the reaction of,

(i) an aromatic polycarboxylic compound containing two or more carboxylic groups; and

(ii) an excess of at least one polyol having from 2 to 8 hydroxyl groups and an equivalent weight of from 30 to 250; and

B. from 5 to 30 percent by weight based on the combined weight of (A) and (B) of a primary or secondary amine terminated polyether of greater than 1500 molecular weight and amine functionality of from 2 to 8 wherein greater than 50 percent of the active hydrogens are in the form of amine hydrogens.

This invention is also directed to molded cellular polymers and process therefor obtained by bringing together in a mold and in the presence of a blowing agent and a urethane forming catalyst, an organic polyisocyanate, a polyol and extender characterized by said polyol and extender comprising the active hydrogen composition set forth above.

This invention is also directed to the above defined active hydrogen compositions comprising additionally from 1 to 30 percent by weight of a fluorocarbon blowing agent.

The improved molded cellular polymers of the invention can be prepared by bringing together the following ingredients using any of the conventional molding techniques employed in the polyurethane art. The novelty of the present products resides in the use of particular active hydrogen compositions defined above and which compositions themselves form part of the present invention. Although any of the known molding techniques can be employed, it is the reaction injection molding (RIM) method which is particularly preferred. The molding methods and procedures disclosed in the U. S. Patents 3,655,597, 3,836,424, 4,292,411, 4,263,408 and 4,530,941 cited supra along with their general teaching in respect of polyurethanes and polyisocyanurates and the ingredients employed can be employed in the present compositions and molded polymers.

When the active hydrogen compositions are reacted with organic polyisocyanates in accordance with the invention, the molded cellular foam bodies obtained have high impact strengths. Surprisingly, and, in contrast to the prior art, there is little or no loss in their resistance to high temperatures as measured by heat deflection temperature in accordance with ASTM Test Method D648.

Additionally, the active hydrogen compositions provide stable homogeneous blends (commonly known as a "B side") which maintain their homogeneity during storage or in dispensing through equipment such as the high pressure heads and auxiliary equipment routinely employed in RIM processing. This homogeneity is maintained notwithstanding the presence of low molecular weight glycol ingredients.

Further, the stable blends have excellent miscibility with fluorocarbon blowing agents over the entire range of proportions required for any desired density. This attribute allows for the preparation of the present molded bodies using a two component system wherein the A side comprises the polyisocyanate ingredients and the B side includes all of the remaining reactants and adjuvants.

The polyester polyol mixtures (A) of the active hydrogen compositions are obtained by the reaction of an excess (as hereinafter defined) of at least one polyol as defined above with an aromatic polycarboxylic compound containing 2 or more carboxylic groups under normal esterification conditions well known in the art.

The aromatic polycarboxylic compounds employed preferably contain from two to three carboxylic groups either in the form of the free acids or the corresponding anhydrides thereof, where appropriate. The term "aromatic" means an aromatic nucleus having from 6 to 12 carbon atoms and is inclusive of benzene, toluene, xylene, naphthalene, and nucleii containing two benzene rings including those compounds wherein the aromatic rings are additionally substituted by one or more halo groups (fluorine, chlorine, bromine and iodine, particularly chlorine and bromine) and one or more inert substituents such as $C_1$ to $C_4$ alkyl.

Illustrative of the aromatic polycarboxylic compounds but not limiting thereof are isophthalic acid, terephthalic acid, phthalic acid and the anhydride thereof, halogen substituted phthalic such as 3 or 4-chloro-, bromo-, and iodo-phthalic, tetrachlorophthalic, tetrabromophthalic acids and the anhydrides thereof, 3,4-toluenedicarboxylic acid and the anhydride thereof, 1,5-naphthalenedicarboxylic acid, 4,4'-dicarboxydiphenyl, 4,4'-dicarboxydiphenylsulfone, 4,4'-dicarboxybenzophenone, 4,4'-dicarboxydiphenyl ether, 4,4'-dicarboxydiphenylmethane, trimelletic acid and the anhydride thereof, hemimelletic acid and the anhydride thereof, and trimesic acid.

A preferred group of polycarboxylic compounds consists of phthalic, isophthalic, terephthalic, and trimellitic acids and the anhydrides where appropriate and the halogenated phthalic acids set forth above. A particularly preferred group consists of phthalic (anhydride thereof), iso-, and terephthalic acids.

The at least one polyol employed in the esterification process, preferably has an hydroxyl functionality of 2 to 4 and an equivalent weight of from 30 to 150, most preferably from 30 to 100. Although a single polyol can be employed in excess in the esterification process, it is preferred to use a combination of two or more different low equivalent weight polyols. No particular functionalty or equivalent weight requirements need be met in the choice of which polyols to combine, simply that they meet the limitations of functionality and equivalent weight ranges set forth above.

Typical of the polyols which can be employed are ethylene glycol, diethylene glycol, triethylene glycol, propylene glycol, dipropylene glycol, tripropylene glycol, 1,4-butanediol, 1,6-hexanediol, neopentyl glycol, dibromoneopentyl glycol, glycerine, triols prepared from glycerine with 1 to 10 molar proportions of ethylene or propylene oxide, trimethylolpropane, pentaerythritol, the polyethyleneoxy glycols such as Carbowax 200 and 400 (supplied by Union Carbide Corp.) and similar polypropyleneoxy glycols, butenediol, cyclohexanediol, bisphenol A, methylglucoside, sorbitol, and mannitol.

A preferred group of polyols comprise ethylene glycol, diethylene glycol, propylene glycol, dipropylene glycol, glycerine, and the triols prepared from glycerine with 1 to 10 molar proportions of ethylene or propylene oxide.

The term "excess" in respect of the at least one polyol means the excess of polyol or mixture thereof over and above the stoichiometric proportion of one mole of polyol designated for reaction with each carboxylic group present in the polycarboxylic compound. It will be readily apparent to one skilled in the art, that the term carboxylic group refers to the carbonyl function regardless of whether it appears as part of an anhydride or as a free carboxylic acid group. Illustratively, a difunctional polycarboxylic compound such as phthalic anhydride or its free acid calls for a stoichiometric molar requirement of polyol (regardless of functionality) to polycarboxylic compound of 2 to 1; and for a trifunctional compound such as trimellitic anhydride for a stoichiometric ratio of 3 to 1. Clearly, when more than one polyol is employed in the esterification then the sum total of all the molar proportions of polyol would be included in these ratios. Accordingly, the polyol(s) is employed in excess so that complete esterification can be effected, and, additionally, so that excess liquid polyol can be present to serve both as viscosity modifier and extender in the urethane forming reaction.

The exact amount of excess is not particularly critical other than to provide a polyester polyol mixture having both a reasonable viscosity, for example, lower than 100,000, preferably below 50,000 cps at 25°C and sufficient free polyol to serve as an extender. Advantageously, the excess falls within a range of from 0.2 mole to 3.0 moles, preferably from 0.4 to 2.0 per mole of polycarboxylic compound.

3

In carrying out the esterification between the polyol(s) and polycarboxylic compounds, standard esterification conditions and procedures are employed as described in the prior art; see for example, "Polyurethanes Chemistry and Technology, Part I, pp. 45-46, 1962, Saunders and Frisch, John Wiley & Sons; U. S. Patents 3,459,733 and 4,540,771.

Illustratively, the esterification is conducted in the absence of solvent under a flow of nitrogen and at temperatures from 150°C to 250°C, preferably from 175°C to 225°C for a period from 5 hours to 40 hours, preferably from 8 hours to 15 hours. The acid number of the product is usually from 0.5 to 2 and preferably is below 2. During the reaction period, water which is formed is removed overhead.

Advantageously, catalysts are employed which shorten the esterification period. Exemplary catalysts are p-toluenesulfonic acid, magnesium oxide, calcium oxide, antimony oxide, zinc oxide, lead oxide, magnesium acetate, calcium acetate, zinc acetate, lead acetate, various organic amines, sodium methoxide, potassium methoxide, sodium alkoxytitanates, and tetralkyltitanates. Optionally there can be added to the polyesters, either during preparation or afterwards, preservatives, antioxidants, and other suitable adjuvants.

The polyester polyol mixtures produced in accordance with the method outlined hereinabove are characterized by hydroxyl equivalent weight values from 85 to 200, and preferably in the range from 90 to 150.

Preferably, the polyamine component (B) is a primary amine with a functionality from 2 to 4. Most preferably, the primary amine terminated polyethers have a functionality of 2 to 3 and a molecular weight falling within the range of 2000 to 6000. These amine terminated polyethers, are readily obtained by reductive amination of appropriate precursor polyalkyleneoxy polyols as outlined in U. S. Patent 3,654,370. Generally speaking, any type of polyether polyol can be employed, but preferably, those having secondary hydroxyls are used to facilitate the amination process. In any given amination process some non-aminated polyether polyols may remain in admixture with the polyamine products. Generally speaking, the polyamine products can be considered as having greater than 50 percent of their active hydrogens in the form of amine hydrogens and for the most part greater than 80 percent amine content. That is to say, the polyamines can comprise mixtures ranging from constituents containing polyethers having 100 percent of their functionality as amine to those having greater than 50 percent amine content.

Typical polyamine terminated polyethers meeting the above requirements are commercially available from Texaco Chem. Co. under the trade names Jeffamine D-2000 (polyoxypropylene diamine, molecular weight = 2000), Jeffamine ED-2001 (polyoxypropylene-polyoxyethylene diamine, molecular weight = 2000), Jeffamine T-3000 (polyoxypropylene triamine, molecular weight = 3000), and Jeffamine T-5000 (polyoxypropylene triamine, molecular weight = 5000).

The components (A) and (B) are simply blended together using any convenient means for mixing liquid ingredients to form the active hydrogen compositions in accordance with the present invention. Generally speaking, the (B) component is employed with the (A) component in sufficient proportions so as to provide the improved impact strengths with retention of heat resistance in the molded polyurethanes. Advantageously, it is employed in the proportions of from 5 to 30 percent by weight, preferably, from 8 to 25 percent based on the combined weight of (A) and (B).

In another embodiment, the active hydrogen compositions in accordance with this invention can contain from 1 to 30 percent by weight of a fluorocarbon blowing agent without any separation of the fluorocarbon occurring over prolonged storage. Preferably the fluorocarbon blowing agent falls within the range of 2 to 10 percent by weight. The fluorocarbon blowing agents are well known to those skilled in the art and are set forth in detail in the references set forth above. Illustrative but not limiting thereof are chlorotrifluoromethane, dichlorodifluoromethane, trichlorofluoromethane, methylene chloride, and chloroform. A particularly preferred blowing agent for incorporation in the active hydrogen compositions is trichlorofluoromethane.

In carrying out the preparation of the molded cellular polymers in accordance with the present invention the novel active hydrogen compositions described above can be employed directly as a premixed "B side" blend for reaction with the organic polyisocyanate. Alternatively, the components of the blend, i.e. the polyester polyol mixture and the amine terminated polyether can be fed as separate streams to the reaction site. Generally speaking, it is preferable to employ a single stream for the B side containing in addition to the polyol components, the blowing agent, catalyst, and any other optional adjuvants discussed below.

Any of the organic polyisocyanates commonly employed in the art for the preparation of molded cellular polyurethanes can be employed herein. Included are those organic polyisocyanates disclosed in the incorporated references. Typically, any of the known organic di- or higher functionality aliphatic or aromatic polyisocyanates can be employed. The preferred class includes the aromatic polyisocyanates.

Illustrative, but not limiting thereof, are 1,6-hexamethylene diisocyanate, 1,4-cyclohexylene diisocyanate, 4,4'-methylenebis(cyclohexyl isocyanate), m- and p-phenylene diisocyanate, 2,4- and 2,6-toluene diisocyanate and mixtures of these two isomers, methylenebis(phenyl isocyanate) inclusive of 4,4'-

methylenebis(phenyl isocyanate), 2,4′-methylenebis(phenyl isocyanate), and mixtures of these methylenebis(phenyl isocyanate) isomers, 3,3′-dimethyl4,4′-diisocyanatodiphenyl methane; liquefied forms of methylenebis(phenyl isocyanate) particularly liquefied forms (including mixtures containing up to 20 percent of the 2,4′-isomer) of 4,4′-methylenebis(phenyl isocyanate) such as the carbodiimide-containing 4,4′-methylenebis(phenyl isocyanates) having isocyanate equivalent weights of from 130 to 180 prepared for example by heating 4,4′-methylenebis(phenyl isocyanate) with a carbodiimide catalyst to convert a portion of said isocyanate to carbodiimide; and liquefied forms of 4,4′-methylenebis(phenyl isocyanate) which have been reacted with minor amounts (from 0.04 to 0.2 equivalent per equivalent of isocyanate) of low molecular weight glycols such as dipropylene glycol, tripropylene glycol, and mixtures thereof; isocyanate terminated prepolymers having an isocyanate content of 9 to 20 percent by weight prepared from methylenebis(phenyl isocyanate) and a polyol having a functionality from 2 to 3 selected from polyalkyleneoxy polyols of molecular weight 1000 to 10,000, polytetramethylene glycols of molecular weight 600 to 5000, and polyester polyols of molecular weight 500 to 8000, said polyol and said methylenebis(phenyl isocyanate) being reacted to the proportions of 0.01 equivalent to 0.5 equivalent of said polyol per isocyanate equivalent; blends or mixtures of any of the above polyisocyanates and particularly mixtures of the liquefied methylenebis(phenyl isocyanates) with each other and with the isocyanate terminated prepolymers described above in any proportions desired; polymethylene poly(phenyl isocyanate) mixtures containing from 20 percent to 85 percent by weight (preferably 30 to 60 percent) of methylenebis(phenyl isocyanate), with the balance of 80 to 15 percent by weight (70 to 40 percent) of the mixtures being polymethylene poly-(phenyl isocyanates) of functionality higher than 2; included in the polymethylene poly(phenyl isocyanates) are those having the 4,4′-methylenebis(phenyl isocyanate) isomer and mixtures including up to 30 percent of the corresponding 2,4′-isomer.

Particularly preferred are the polymethylene poly(phenyl isocyanates):

The proportions in which the various reactants are employed are such that the overall ratio of equivalents of polyisocyanate to the total equivalents of active hydrogen comprised of the polyester polyol mixture (A) and amine terminated polyether (B) falls within the range of 0.90:1 to 1.5:1. When said ratio exceeds 1.2:1 it is preferable that the urethane forming catalyst employed possesses additional activity as an isocyanate trimerization catalyst or that an isocyanate trimerization catalyst be employed in conjunction with the requisite urethane catalyst. Preferably, the ratio lies within the range of from 0.95:1 to 1.15:1.

Any of the urethane catalysts disclosed in the art supra can be employed in the present process. Such catalysts include organic and inorganic acid salts of, and organometallic derivatives of bismuth, tin, lead, antimony, and cobalt as well as phosphines and tertiary organic amines. A preferred group of such catalysts include stannous octoate, stannous oleate, dibutyltin diacetate, dibutyltin dioctoate, dibutyltin dilaurate, dibutyltin maleate, dibutyltin mercaptopropionate, dibutyltin didodecylmercaptide, and dibutyltin bis-(isooctylthioglycolate); triethylamine, triethylenediamine, N,N,N′,N′-tetramethylethylenediamine, N-methyl-morpholine, and N,N-dimethylcyclohexylamine, and mixtures of the above in any combination.

Generally speaking, the catalyst or mixture of catalysts, if employed, will fall within a range of from 0.01 percent by weight to 5 percent by weight based on the total weight of all the ingredients.

The trimerization catalysts employed can be any catalyst known to those skilled in the art which will catalyze the trimerization of an organic isocyanate compound to form the isocyanurate moiety. For typical catalysts see the Journal of Cellular Plastics, November/December 1975, p. 329; U. S. Patents 3,745,133, 3,896,052, 3,899,443, 3,903,018, 3,954,684, and 4,101,465.

As previously discussed the fluorocarbon blowing agents can be employed in the proportions set forth above as part of the B side in accordance with the compositions of the invention. Alternatively, the fluorocarbon may be added separately to the reaction ingredients in such proportions that the resultant molded polymer's specific gravity falls within a range of 0.4 to 1.2, preferably 0.7 to 1.0. Optionally, other blowing agents can be employed in conjunction with the fluorocarbon, such agents being minor proportions of water to form carbon dioxide and polyurea linkages, and inert gases (e.g. nitrogen, argon).

Other optional additives can be employed either as separate streams or dissolved in the B side. Typical of such additional components are cell stabilizers, surfactants, internal mold release agents, flame retardants, colorants, reinforcing agents, fiberglass, organic fibers, and fillers according to the teachings of the cited references above. A preferred class of flame retardant additives are the phosphorus containing flame retardants including those having active hydrogen reactivity (hydroxyl and amine groups) such as dibromoneopentyl glycol, tris(2-chloroethyl)phosphate, tris(2-chloropropyl)phosphate, tris(2,3-dibromopropyl)phosphate, and tri(1,3-dichloroisopropyl)phosphate.

The molded products in accordance with the present invention are characterized by high and increased impact strengths proportionate to the level of the aminated polyether component (B). Unexpectedly, this increased impact strength is gained with little or no loss in the heat resistance of the molded products as measured by heat deflection temperatures according to ASTM Test Method D648. Contrastingly, when known prior art impact modifying polyols are used in place of the aminated polyethers, the result is the expected increase in impact strength but unfortunately at a loss of heat resistance for the molded products (see Example 1 below).

In a further advantage to flow from the present invention the molded products can be readily formulated with fire retardants to achieve at least a V-1 rating and in most cases a V-0 rating when tested by the UL-94 vertical burn test defined below in Example 1.

Furthermore, the molded products are tough materials having flexural modulus values well in excess of 200,000 psi.

Because of the combination of properties described above, the molded cellular polymers of this invention are particularly useful in the preparation of cabinet housings in the electrical industry, computer hardware, technical instrumentation, medical instrumentation, and the like; in ski cores, office furniture, window framing, and any housing or cabinet application calling for a UL-94 V-0 rating with high strength and resistance to heat which may be generated by the cabinet contents.

The following examples describe the manner and process of making and using the invention and set forth the best mode contemplated by the inventors of carrying out the invention but are not to be construed as limiting.

Example 1

This example sets forth two molded cellular foams in accordance with the present invention (Foams A and B) along with molded Comparison Foams (CF1 to CF6) using the ingredients in the proportions of parts by weight set forth in Table I.

The foams were prepared using a bench-scale preparation wherein the component A comprising the polyisocyanate (at 20°C) was mixed with component B also at 20°C and comprising the ingredients set forth in Table I in a quart cup. The reactants were rapidly stirred using an agitator driven at high speed (2400 RPM) for a 5 second period and then immediately poured into a 20 cm x 20 cm x 6 mm clam-shell aluminum mold at 65°C. The demold time was 2 1/2 minutes with no post-curing and the samples were tested for the properties set forth in Table I.

The Polyester Polyol I employed was prepared illustratively as follows: A 12 liter resin flask equipped with an overhead stirrer, thermometer, nitrogen sparge, distillation head and condenser was charged with 920 g. (10 moles) of glycerol, 2230 g. (16.64 moles) of dipropylene glycol followed by 1660 g. (10 moles) of terephthalic acid and 2.88 g. (0.06 percent by weight of total ingredients) of an esterification catalyst Fascat 4100 (supplied by M & T Chemicals). The mixture was heated slowly and after a total time of 9 to 12 hours the solution temperature had reached 205°C with the theoretical amount of formed water having been collected: Eq. wt. = 103: viscosity = 10,000 cps. (25°C); acid # = 0.87; % by wt. free dipropylene glycol = 28%; % by wt. free glycerine = 8%.

Foam A which contained 9 percent by weight of the polypropyleneoxy triamine based on its combined weight with polyester polyol was characterized by excellent impact strength, heat deflection temperature and UL-V-0 rating set forth in Table I. When the polypropyleneoxy triamine was raised to 23 percent by weight in Foam B the impact strength was raised further with retention of HDT at a high level and a reduction of fire resistance to a V-1 rating.

Comparatively, CF1 with no polypropyleneoxy triamine, while having UL-94 and HDT properties comparable to Foam A, had an impact strength much inferior. When a known impact improving polyol such as the A-1228 was added in CF2 and CF3 at comparable levels to the triamine in A and B respectively, the impact strengths improved but the HDT values decreased particularly at the 23 percent by weight level in CF3. This same fall-off in HDT values was observed in the series CF4 to CF6 when another impact improving polyol was studied. As the impact strengths were improved in CF5 and CF6 over CF4, the HDT values decreased.

Table I

| Foams | A | B | CF1 | CF2 | CF3 | CF4 | CF5 | CF6 |
|---|---|---|---|---|---|---|---|---|
| Ingredients (pts. by wt.) | | | | | | | | |
| Component A: | | | | | | | | |
| Polyisocyanate I[1] | 71.4 | 72.2 | 70.9 | 71.3 | 72.0 | 82.6 | 83.4 | 84.8 |
| Component B: | | | | | | | | |
| Polyester Polyol I[2] | 50 | 50 | 50 | 50 | 50 | 50 | 50 | 50 |
| T-5000[3] | 5 | 15 | -- | -- | -- | -- | -- | -- |
| A-1228[4] | -- | -- | -- | 5 | 15 | -- | -- | -- |
| EPD-56[5] | -- | -- | -- | -- | -- | -- | 5 | 15 |
| DE-60F[6] | 15 | 15 | 15 | 15 | 15 | -- | -- | -- |
| FR-2000[7] | -- | -- | -- | -- | -- | 10 | 10 | 10 |
| Tris(2-chloroethyl)-phosphate | -- | -- | -- | -- | -- | 6 | 6 | 6 |
| DC-193[8] | 1.0 | 1.0 | 1.0 | 1.0 | 1.0 | 1.0 | 1.0 | 1.0 |
| Polycat 32[9] | 1.1 | 1.1 | 1.1 | 1.1 | 1.1 | 2 | 2 | 2 |
| Freon-11 | 2.0 | 2.0 | 2.0 | 2.0 | 2.0 | 3 | 3 | 3 |

0 292 592

Table I, continued

| Foams | A | B | CF1 | CF2 | CF3 | CF4 | CF5 | CF6 |
|---|---|---|---|---|---|---|---|---|
| **Properties** | | | | | | | | |
| Density (g/cc) | 0.90 | 0.85 | 0.88 | 0.78 | 0.79 | -- | -- | -- |
| Flexural Modulus[10] $(kg/cm^2)$ | 20232 | 14861 | 21329 | 15543 | 13441 | -- | -- | -- |
| Flexural Strength[10] $(kg/cm^2)$ | 702 | 513 | 619 | 498 | 451 | -- | -- | -- |
| Charpy Impact[11] (J/m) | 431 | 574 | 174 | 400 | 493 | 174 | 376 | 414 |
| HDT ($^{O}$C)[12] (4.6 $kg/cm^2$) | 97 | 88 | 94 | 90 | 73 | 94 | 76 | 65 |
| UL-94[13] | V-0 | V-1 | V-0 | V-0 | V-1 | -- | -- | -- |

0 292 592

Footnotes to Table I:

[1]Polyisocyanate I: A polymethylene poly(phenyl isocyanate) containing 40 percent by weight of methylenebis(phenyl isocyanate) the balance having a functionality higher than 2; I.E. = 133.

[2]Polyester Polyol I: Hydroxyl Eq. wt. = 103; contains 8 percent by weight glycerine and 28 percent by weight dipropylene glycol.

[3]T-5000: A polypropyleneoxy triamine of 5000 molecular weight supplied by Texaco Chemical Co.

[4]A-1228: A 6000 molecular weight polypropyleneoxypolyethyleneoxy triol; OH E.W. = 2000; 14 to 16 percent ethyleneoxy composition; supplied by Witco Chemical Co.

[5]EPD-56: A 2000 molecular weight polypropyleneoxypolyethyleneoxy diol; OH E.W. = 1000; supplied by Witco Chemical Co.

[6]DE-60F: A solution of 85 percent by weight of pentabromodiphenyl oxide dissolved in a polyphosphate ester; supplied by Great Lakes Chemical Co.

[7]FR-2000: A sucrose based polyol containing ~ 30 percent by weight dibromoneopentyl glycol; OH E.W. = 125.

[8]DC-193: A silicone surfactant supplied by Dow Corning Corporation.

[9]Polycat 32: A tertiary amine catalyst comprising a mixture of dimethylamino-cyclohexylamine and N-methyldicyclohexylamine; supplied by Abbott Laboratories.

[10]Flexural properties measured in accordance with ASTM Test method D-790.

[11]Charpy Impact: Impact resistance test measured in

Footnotes to Table I, continued

accordance with ASTM Test Method D-256.

[12]HDT: Heat deflection temperature measured in accordance with ASTM Test Method D-648.

[13]UL-94: UL-94-V0 is the highest rating for non-burning of plastics when tested in the UL-94 vertical burn test in accordance with the test method described by Underwriters Laboratories, Inc., Northbrook, Illinois. The test specimen measures 13 cm x 1.3 cm x 1.6 mm thickness. Specimens are conditioned by storage for 48 hours at 23°C and 50% relative humidity followed by 168 hours at 70°C then cooled in a desiccator prior to testing. The specimen is clamped by one end so that it hangs vertically in a draft-free chamber with the lower end suspended 30 cm above a 13 square cm thin layer of cotton. A 2 cm blue flame of a bunsen burner is held for 10 seconds under the sample then removed and flame duration noted. The flame is placed again for another 10 second period. Specimens are tested in sets of five for each blend. Test observations include duration of flame after first and second flame application, whether sample burns up to the clamp, particularly whether specimen drips flaming particles to ignite the cotton. To achieve UL-94-V0 the specimen must not burn more than 10 seconds after either flame application; total combustion time not to exceed 50 seconds for all 10 applications (5 specimens x 2 flame applications each); no burning up to clamp; no flaming drip or cotton ignition; specimen glow time no more than 30 seconds after removal of second flame.

Example 2

This example sets forth four molded cellular foams C to F, inclusive, in accordance with the present invention using the ingredients in the proportions of parts by weight set forth in Table II.

The molded foams were prepared using an Admiral Equipment Company (division of The Dow Chemical Co.) 2000 HP RIM machine and employing two reactant streams. Stream (component) A was the Polyisocyanate I at 35°C while stream (component) B comprised the ingredients noted in Table II at a temperature of 38°C. The components were mixed at 140 kg/cm² in the high pressure impingement mixing head and discharged into a 25.4 cm x 46 cm x 6 mm closed aluminum mold at 65°C. The demold time was 2 1/2 minutes with no post curing.

The Polyester Polyol I prepared according to Example 1 above was employed in Foams C, D, and E, whereas Foam F employed the Polyester Polyol II. This latter polyol was prepared similarly to Polyol I using the same procedure but the reactants of terephthalic acid, glycerol, dipropylene glycol, and the triol prepared from the reaction of glycerol with propylene oxide in the molar proportions of 1 to 3, respectively.

The molar proportions of these ingredients were 1.0:0.8:1.73:0.2, respectively. The resultant polyol mixture had a hydroxyl eq. wt. = 106; viscosity 19,000 cps. (25°C); and acid # = 0.2.

Foams C through F are all possessed of very high impact strengths combined with excellent resistance to heat as measured by HDT values as set forth in Table II.

## Table II

| Foams | C | D | E | F |
|---|---|---|---|---|
| **Ingredients** | | | | |
| (pts. by wt.) | | | | |
| Component A: | | | | |
| Polyisocyanate I | 72.0 | 72.6 | 83.0 | 70.0 |
| Component B: | | | | |
| Polyester Polyol I | 50 | 50 | 50 | -- |
| Polyester Polyol II | -- | -- | -- | 50 |
| T-5000 | 5 | 15 | 5 | 5 |
| DE-60F | 15 | 15 | -- | 15 |
| FR-2000 | -- | -- | 10 | -- |
| Tris(2-chloroethyl)phosphate | -- | -- | 6 | -- |
| DC-197[1] | 1 | 1 | -- | -- |
| DC-193 | -- | -- | 1 | 1 |
| Polycat 32 | 1 | 1 | 2 | 1.5 |
| Freon-11 | 1.5 | 1.5 | 3 | 1.5 |
| **Properties** | | | | |
| Density (g/cc) | -- | -- | 0.85 | -- |
| Flexural Modulus (kg/cm$^2$) | 20,078 | 18,208 | -- | 16,359 |
| Flexural Strength (kg/cm$^2$) | 693 | 539 | -- | 712 |
| Tensile Strength (kg/cm$^2$) | 380 | 310 | -- | 380 |
| Charpy Impact, (J/m) | 806 | 1105 | 728 | 747 |
| HDT (°C), 4.6 kg/cm$^2$ | 97 | 97 | 109 | 87 |
| 19 kg/cm$^2$ | -- | -- | 88 | -- |

Footnote to Table II:

[1]DC-197: A silicone surfactant supplied by Dow Corning Corp.

## Claims

1. An active hydrogen composition characterized by comprising:

A. a polyester polyol mixture derived from the reaction of,

(i) an aromatic polycarboxylic compound containing two or more carboxylic groups; and

(ii) an excess of at least one polyol having from 2 to 8 hydroxyl groups and an equivalent weight of from 30 to 250; and

B. from 5 to 30 percent by weight based on the combined weight of (A) and (B) of a primary or secondary amine terminated polyether of greater than 1500 molecular weight and amine functionality of from 2 to 8 wherein greater than 50 percent of the active hydrogens are in the form of amine hydrogens.

2. A composition according to Claim 1 wherein said polyester polyol mixture (A) is derived from the reaction of (i) an aromatic polycarboxylic compound having two to three carboxylic groups and (ii) at least one polyol having from 2 to 4 hydroxyl groups and an equivalent weight of from 30 to 150 said (ii) being employed in an excess of from 0.2 mole to 3 moles per mole of said polycarboxylic compound.

3. A composition according to Claim 2 wherein said polyester polyol mixture (A) is derived from terephthalic acid and a mixture of glycerine and dipropylene glycol and said (B) has an amine functionality of 3 and an average molecular weight of 5000.

4. A composition according to Claim 2 wherein said polyester polyol mixture (A) is derived from terephthalic acid and a mixture of glycerine, dipropylene glycol, and the triol prepared from the reaction of glycerine with propylene oxide. in the molar proportions of 1 to 3, respectively, and said (B) has an amine functionality of 3 and an average molecular weight of 5000.

5. A composition according to Claim 1 comprising additionally from 1 to 30 percent by weight of a fluorocarbon blowing agent.

6. A molded cellular polymer obtained by bringing together in a mold and in the presence of a blowing agent and a urethane forming catalyst, an organic polyisocyanate, a polyol and extender characterized by said polyol and extender comprising an active hydrogen composition according to Claim 1.

7. A polymer according to Claim 6 wherein said molding is carried out by the reaction injection molding process.

8. A molded cellular polymer according to Claim 7 whioh comprises the reaction product obtained by bringing together under reaction injection molding conditions:

1. a polymethylene poly(phenyl isocyanate);

2. an active hydrogen composition comprising:

A. a polyester polyol mixture derived from the reaction of,

(i) an aromatic polycarboxylic compound having two to three carboxylic groups, and

(ii) at least one polyol having from 2 to 4 hydroxyl groups and an equivalent weight of from 30 to 150 and employed in an excess of from 0.2 mole to 3 moles per mole of said aromatic polycarboxylic compound (i); and

B. from 5 to 30 percent by weight based on the combined weight of (A) and (B) of a primary amine terminated polyether having a molecular weight of from 2000 to 6000, an amine functionality of from 2 to 3 wherein greater than 50 percent of the active hydrogens are in the form of amine hydrogens;

3. a fluorocarbon blowing agent; and

4. a urethane forming catalyst

wherein the ratio of equivalents of said polyisocyanate to total active hydrogen equivalents of said (A) and (B) is within the range of 0.95:1 to 1.15:1.

9. A molded polymer according to Claim 8 wherein said (B) has an amine functionality of 3 and an average molecular weight of 5000.

10. A molded polymer according to Claim 9 wherein said polyester polyol mixture (A) is derived from terephthalic acid and a mixture of glycerine and dipropylene glycol or from terephthalic acid and a mixture of glycerine, dipropylene glycol, and the triol prepared from the reaction of glycerine with propylene oxide in the molar proportions of 1 to 3, respectively.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 157 119 (BASF) <br> * Page 5, line 26 - page 9, line 6; claims 1-5 * <br> --- | 1,2,5-8 | C 08 G 18/40 <br> C 08 G 18/50 |
| A | PATENT ABSTRACTS OF JAPAN, vol. 9, no. 52 (C-269)[1775], 6th March 1985; & JP-A-59 191 712 (ASAHI GLASS K.K.) 30-10-1984 <br> --- | 1 | |
| D,A | US-A-4 530 941 (TURNER et al.) <br> * Column 2, line 21 - column 4, line 62; claim 1 * <br> ----- | 1 | |

|  |  |
|---|---|
|  | TECHNICAL FIELDS SEARCHED (Int. Cl.4) |
|  | C 08 G |

The present search report has been drawn up for all claims

| Place of search | Date of completion of the search | Examiner |
|---|---|---|
| THE HAGUE | 12-01-1988 | BOURGONJE A.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  & : member of the same patent family, corresponding document

EPO FORM 1503 03.82 (P0401)